(19) Europäisches Patentamt
European Patent Office
Office européen des brevets

(11) **EP 4 123 495 A1**

(12) **EUROPEAN PATENT APPLICATION**

(43) Date of publication:
**25.01.2023 Bulletin 2023/04**

(21) Application number: **21187228.8**

(22) Date of filing: **22.07.2021**

(51) International Patent Classification (IPC):
**G06F 30/20** (2020.01)    **G06F 30/17** (2020.01)
**G06F 30/27** (2020.01)    **G09B 9/00** (2006.01)
**G06F 111/04** (2020.01)

(52) Cooperative Patent Classification (CPC):
**G06F 30/20; G06F 30/17; G06F 30/27;**
**G09B 19/24;** G06F 2111/04

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **MCDANIEL, Richard Gary**
 **Hightstown, NJ, 08520 (US)**
• **XIA, Songtao**
 **Lawrenceville, NJ, 08648 (US)**
• **KOLB, Scott**
 **Hopewell, NJ, 08525 (US)**

(74) Representative: **Horn Kleimann Waitzhofer**
**Patentanwälte PartG mbB**
**Ganghoferstraße 29a**
**80339 München (DE)**

(54) **CYLINDRICAL COLLISION SIMULATION USING SPECIALIZED RIGID BODY JOINTS**

(57) Three-dimensional (3D) reconstruction of an object (102) or of an environment (100) can create a digital twin or model of a given environment of a robot (100), or of a robot (102) or portion of a robot, which can enable a robot to learn skills efficiently and safely via simulations.

A simulation system simulates peg-in-hole configurations in a mechanical system (100) that includes a cylindrical object (120) and an object body that defines a cylindrical hole.

**FIG. 1**

**Description**

BACKGROUND

Autonomous operations, such as robotic grasping and manipulation, in unknown or dynamic environments present various technical challenges. Autonomous operations in dynamic environments may be applied to mass customization (e.g., high-mix, low-volume manufacturing), on-demand, flexible manufacturing processes in smart factories, warehouse automation in smart stores, automated deliveries from distribution centers in smart logistics, and the like. In order to perform autonomous operations, robots might interact with a variety of objects under different situations. Often, however, such physical interactions in the real world by robots are time consuming, cost prohibitive, and in some cases, dangerous. Three-dimensional (3D) reconstruction of an object or of an environment can create a digital twin or model of a given environment of a robot, or of a robot or portion of a robot, which can enable a robot to learn skills efficiently and safely via simulations. The simulations may be run as test scenarios to train the robot or may be run simultaneously as the robot runs to anticipate the robot's physical interactions.

It is recognized herein, however, that simulations of many basic configurations of objects are difficult. For example, simulating some configurations using current approaches can be computationally burdensome, such that processing is too slow to enable real-time, interactive responses. In particular, for example, interactions between smooth curved, concave surfaces such as cylinders in peg-in-hole configurations are generally not simulated in current tools, due to current approaches in simulating such configurations being inefficient or slow, among other technical shortcomings.

BRIEF SUMMARY

Embodiments of the invention address and overcome one or more of the described-herein shortcomings or technical problems by providing methods, systems, and apparatuses for simulating various peg-in-hole configurations.

In an example aspect, a simulation system can simulate a mechanical system and display the simulation. The simulation system can determine that the mechanical system includes a cylindrical object and an object body that defines a cylindrical hole. The simulation system can identify a first configuration of the cylindrical object and the object body with respect to each other. Based on the first configuration, the simulation system can construct a first peg-in-hole joint that defines constraints associated with movement of the cylindrical object and the hole with respect to each other. The constraints can define one or more constraint equations associated with the first configuration. The simulation system can solve the constraint equations so as to perform the simulation in accordance with the constraints.

BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:

FIG. 1 shows an example autonomous machine in an example physical environment that includes various objects, in accordance with an example embodiment.

FIGs. 2A-H are example perspective views that illustrate example configurations of a cylindrical object and an object body defining a hole, wherein the configurations each illustrate a respective category of touch points where the cylindrical object makes contact with the object body, in accordance with various example embodiments.

FIG. 3 is a top plan view of example positions of the cylindrical object and the hole defining the touch point shown in FIG. 2C.

FIG. 4 shows an example side plan view and an example projection view for the category touch points defined by the cylindrical object and the hole shown in FIG. 2D.

FIG. 5 shows an example projection view of the cylindrical object and the hole defining the touch point category shown in FIG. 2E.

FIG. 6 shows example graphs of interpolations associated with the touch points shown in FIG. 2D and FIG. 2E.

FIG. 7 shows an example projection associated with the touch point category shown in FIG. 2D and FIG. 2E.

FIG. 8 shows an example side plan view and an example projection view for the category of touch points defined by the cylindrical object and the hole shown in FIG. 2D and FIG. 2E.

FIG. 9 shows an example side plan view for the category of touch points defined by the cylindrical object and the hole shown in FIG. 2E.

FIG. 10 shows an example side plan view and an example projection view for the category of touch points defined by the cylindrical object and the hole shown in FIG. 2F.

FIG. 11 shows an example side plan view and an example projection view for the category of touch points defined by the cylindrical object and the hole shown in FIG. 2G.

FIG. 12 shows an example side plan view and an example projection view for the category of touch points defined by the cylindrical object and the hole shown in FIG. 2H.

FIG. 13 is a flow diagram that illustrates example operations that can be performed by a simulation system in accordance with various embodiments.

FIG. 14 illustrates a computing environment within which embodiments of the disclosure may be implemented.

DETAILED DESCRIPTION

It is recognized herein that simulations in mechanics involving a cylindrical object (e.g., a peg) surrounded by a close-fitting hole are often not feasible due to time delays caused by burdensome processing overhead or inaccuracy caused by modeling and numerical errors. As used herein, such situations in mechanics can be generally referred to as peg-in-hole configurations or situations. By way of example, peg-in-hole situations can include plugging a cord into a socket, running wheels on an axle, and inserting work parts into a package, among various other applications. Embodiments described herein can simulate peg-in-hole situations for tools, machines, and various automations during online runtime or offline analysis.

By way of background, some current tools can simulate peg-in-hole configurations. It is recognized herein, however, that such tools typically do not scale and are often based on finite element methods that might not even consider the movement of an object. In another example, a designer can produce mesh data from a surface and from bulk properties of the objects being simulated and can use finite element methods to propagate physical values across the cells of each mesh. It is recognized herein, however, that such an approach is overly burdensome from a processing perspective for many simulations, such as for simulating a robot picking up a cord and inserting the cord into a socket.

In some cases, simulations of automated devices (e.g., robots or machinery) can define a rigid body simulation in which objects or entities that move are assumed not to deform. For example, joint definitions in rigid body simulators can be based on physical situations that would be physically implemented with pegs in holes. In particular, by way of further example, a hinge joint that represents a rotary constraint in a single dimension can be considered as a radical simplification of curved objects (holes) rotating on an axis (a peg). Similarly, a cylindrical joint can define a hole and peg that are allowed to translate. It is recognized herein, however, that current rigid body physics engines do not consider general peg-in-hole configurations in which, for example: a peg can be inserted into a hole, or a hole is larger than the peg such that the hole and peg can twist with respect to one another to some degree.

It is further recognized herein that using collision surfaces to simulate the interaction of pegs and holes can be computationally expensive and/or inaccurate. For example, in some cases, given physics engines might only support the definition of convex objects. Thus, a concave hole is produced from a multitude of smaller surfaces. The simulated surface becomes smoother as the number of surfaces increases, but increasing the number of objects in the surface slows the simulation and can make simulating multiple holes at once more difficult. Further still, current physics engines often do not support curved surfaces. Thus, a cylindrical peg might also be simulated as a polygonal object. Again, for example, more elements can produce a smoother surface but increases computation time and complexity. Additionally, simulating a polygonal peg into a polygonal hole does not interact smoothly because, for example, the virtual corners of the peg can catch on the virtual corners of the hole. Also, when the hole size and peg size are differently sized, the polygonal approximation can become more inexact and affects how far the objects twist with respect to one other.

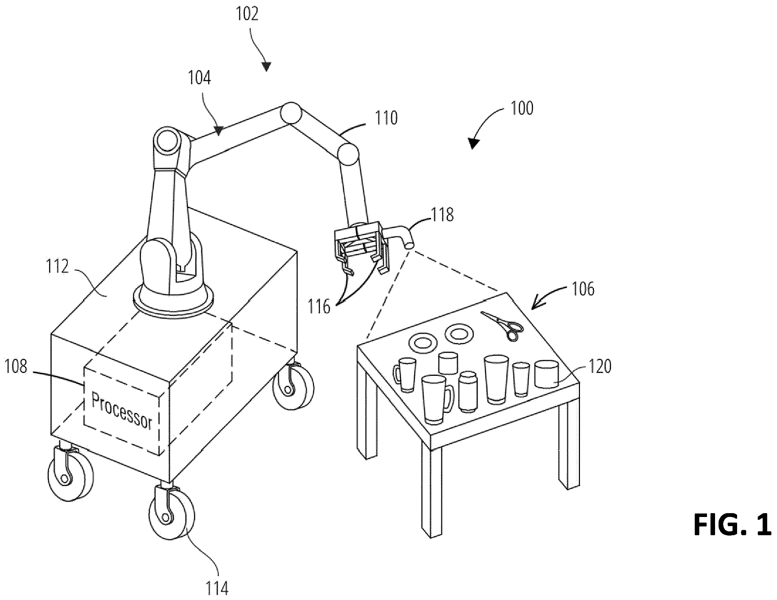

Referring now to FIG. 1, an example industrial or physical environment 100 is shown. A reconstruction or model may define a virtual representation of the physical environment 100 or one or more objects 106 within the physical environment 100. The physical environment 100 can include a computerized autonomous system 102 configured to perform one or more manufacturing operations, such as assembly, transport, or the like. Such operations or tasks may include peg-in-hole configurations. The autonomous system 102 can include one or more computing systems and one or more robot devices or autonomous machines, for instance an autonomous machine 104, configured to perform one or more industrial tasks. The system 102 can include one or more computing processors configured to process information and control operations of the system 102, in particular the autonomous machine 104. The autonomous machine 104 can include one or more processors, for instance a processor 108, configured to process information and/or control various operations associated with the autonomous machine 104. An autonomous system for operating an autonomous machine within a physical environment can further include a memory for storing modules. The processors can further be configured to execute the modules so as to process information and generate models based on the information. It will be understood that the illustrated environment 100 and the system 102 are simplified for purposes of example. The environment 100 and the system 102 may vary as desired, and all such systems and environments are contemplated as being within the scope of this disclosure.

Still referring to FIG. 1, the autonomous machine 104 can further include a robotic arm or manipulator 110 and a base 112 configured to support the robotic manipulator 110. The base 112 can include wheels 114 or can otherwise be configured to move within the physical environment 100. The autonomous machine 104 can further include an end effector 116 attached to the robotic manipulator 110. The end effector 116 can include a gripper or one more tools configured to grasp and/or move objects 106. The robotic manipulator 110 can be configured to move so as to change the position of the end effector 116, for example, so as to place or move objects 106 within the physical environment 100. The system 102 can further include one or more cameras or sensors, for instance a three-dimensional (3D) point cloud camera 118, configured to detect or record objects 106 within the physical environment 100. The camera 118 can be mounted to the robotic manipulator 110 or otherwise configured to generate a 3D point cloud of a given scene, for instance the physical environment 100. Alternatively, or additionally, the one or more cameras of the system 102 can include one or more standard two-dimensional (2D) cameras that can record or capture images (e.g., RGB images or depth images) from different viewpoints. Those images can be used to construct 3D images. For example, a 2D camera can be mounted to the robotic manipulator 110 so as to capture images from perspectives along a given trajectory defined by the manipulator 110.

With continuing reference to FIG. 1, in an example, one or more cameras can be positioned over the autonomous machine 104, or can otherwise be disposed so as to continuously monitor any objects within the environment 100. For example, when an object, for instance one of the objects 106, is disposed or moved within the environment 100, the camera 118 can detect the object. In some cases, if the object is recognized, the processor 108 or another computing system (or simulation system) can retrieve a model of the object, for example, to simulate a task that involves the object. In particular, a cylindrical object 120 can be simulated by a simulation system in various peg-in-hole configurations, in accordance with various embodiments described herein.

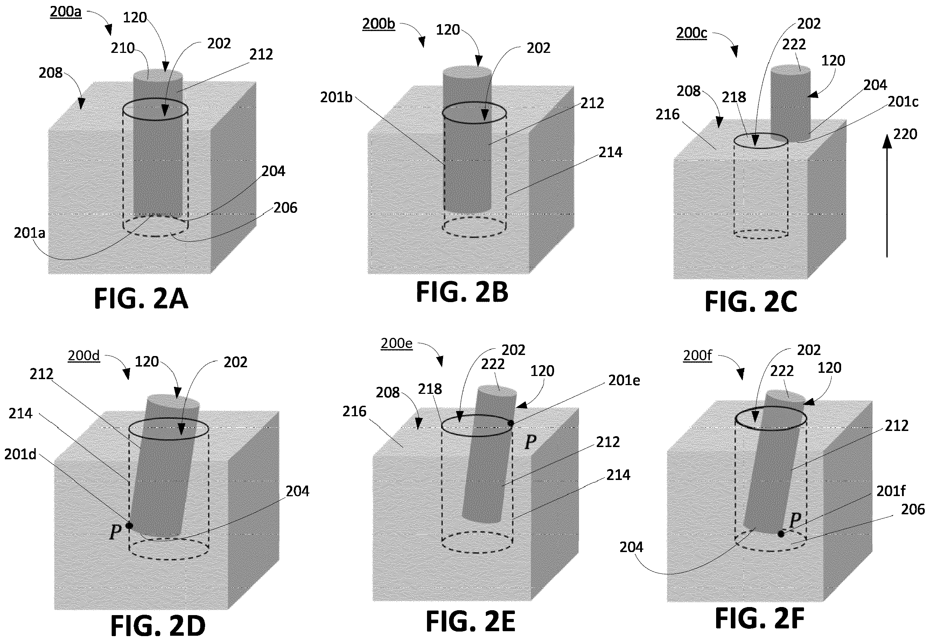

Referring generally to FIGS. 2A-H, the object 120 can be simulated to interact with a hole 202. The example cylindrical object 120 defines a peg as an example, though it will be understood that the simulated object can define alternative cylindrical shapes, such as a protrusion from a larger object, and simulations of all such objects are contemplated as being within the scope of this disclosure. Similarly, the hole 202 defines a cylindrical hole (or negative peg) sized to receive the cylindrical object 120, though it will be understood that the size of the hole 202 can vary as desired, and the hole 202 can be part of a larger geometric object, for instance an object or object body 208. While the illustrated object body 208 defines a rectangular shape, it will be understood that the object that includes the hole 202 can be alternatively sized and shaped as desired, and all such objects are contemplated as being within the scope of this disclosure.

In various examples, the simulation system constructs a peg-in-hole joint defined by the object 120 and the hole 202. The peg-in-hole joint constrains certain degrees of freedom of the cylindrical object 120 and the hole 202 based on their configuration. A joint can refer to a type of constraint that defines a set of equations that are solved to determine how the cylindrical object 120 and the hole 202 can move with respect to each other. The constraints can be solved by a physics engine of the simulation system as part of a simulation. For example, during a rigid body simulation, the constraints can be modeled as pairwise relationships between the rigid bodies. The equations can change as different peg-hole configurations evolve over the course of a simulation, as opposed to other joints where constraints stay the same.

Thus, in various examples, the set of equations can change as the peg-hole configurations evolve as defined by movement of the cylindrical object 120 and the hole 202 with respect to one another. In contrast, other joints can stay the same. As further described herein, the constraint equations can be defined by computing the location of the touch points (P) between the cylindrical object 120 and the hole 202, given their positions with respect to each other. The type of the touch point can be classified, and the constraint equations can be determined based on the type or classification of the respective touch point. In various examples, touch points may be calculated efficiently because of the known properties of the cylindrical shapes that would not be possible with arbitrary shapes.

Referring now to FIGs. 2A-H, when the cylindrical object 120 and the hole 202 touch each other so as define a touch type, the touch type can be classified into different categories, based on the position and size of the object 120 with respect to the hole 202. In particular, for example, FIG. 2A displays a first category 200a of touch points in which the cylindrical object 120 defines a bottom 204 face that touches a bottom face 206 defined by the hole 202. In particular, the object body 208 can include the hole 202, such that the object body 208 defines the bottom face 206 of the hole 202. Thus, the object body 208, in particular the bottom face 206 of the hole 202, and the bottom face 204 of the cylindrical object 120 can define first touch points 201a associated with the first category 200a. The first touch points 201a can also be referred to as a face contact.

The cylindrical object 120 can further define a top face 210 opposite the bottom face 204 of the cylindrical object 210. Further still, the cylindrical object 120 can define a side surface or rim 212 that extends from the top 210 to the bottom 210. The top face 210 and the bottom face 204 can each define a circle, such that the side surface 212 can define a cylinder.

Referring now to FIG. 2B, a second category 200b of touch points can include line contacts between the cylindrical object 120 and the hole 202. In particular, the hole 202 can define a wall 214 that touches the side surface 212 of the cylindrical object 120. Thus, the wall 214 and the side surface 212 can contact each other so as to define second touch points 201b between the hole 202 and the cylindrical object 120. Thus, the second touch points 201b can also be referred to as a line contact.

Referring now to FIG. 2C, a third category 200c of touch points can include another face contact between the cylindrical object 120 and the hole 202. In particular, the object body 208 can define a top surface 216 opposite the bottom face 206 of the hole 202. The top surface 216 of the object body 208 can define a top 218 of the hole 202 that is opposite the bottom face 206 along a hole axis or longitudinal direction 220. The top surface 216 of the object body 208 and the bottom face 204 of the cylindrical object 120 can contact each other, so as to define third touch points 201c between the hole 202 and the cylindrical object 120.

Referring now to FIG. 2D, a fourth category 200d of touch points can include point contacts between the cylindrical object 120 and the hole 202. In particular, the side surface or rim 212 of the cylindrical object 120 can contact the wall 214 of the hole 202, so as to define fourth touch points 201d between the hole 202 and the cylindrical object 120. In various examples, the fourth touch points 201d are defined at a location on the side surface 212 at which the side surface 212 meets the bottom face 204, such that the fourth touch points 201d are defined at the bottom of the side surface 212 of the cylindrical object 120 and at any location on the wall 214 as desired.

Referring now to FIG. 2E, a fifth category 200e of touch points can include other point contacts between the cylindrical object 120 and the hole 202. In particular, the side surface or rim 212 of the cylindrical object 120 can contact the wall 214 of the hole 202 at the top 218 of the hole 202, so as to define fifth touch points 201e between the hole 202 and the cylindrical object 120. In various examples, the fifth touch points 201e are defined at a location on the wall 214 at which the wall 214 meets the top surface 216 of the object body 208, such that the fifth touch points 201e are defined at the top 218 of the hole 202 and at any location on the side surface 212 as desired.

Referring now to FIG. 2F, a sixth category 200f of touch points can include other point contacts between the cylindrical object 120 and the hole 202. In particular, the side surface or rim 212 of the cylindrical object 120 can contact the bottom face 214 of the hole 202, so as to define sixth touch points 201f between the hole 202 and the cylindrical object 120. In various examples, the sixth touch points 201f are defined at a location on the side surface 212 at which the side surface 212 meets the bottom face 204, such that the sixth touch points 201f are defined at the bottom of the side surface 212 of the cylindrical object 120 and at any location on the bottom face 206 of the hole 202 as desired.

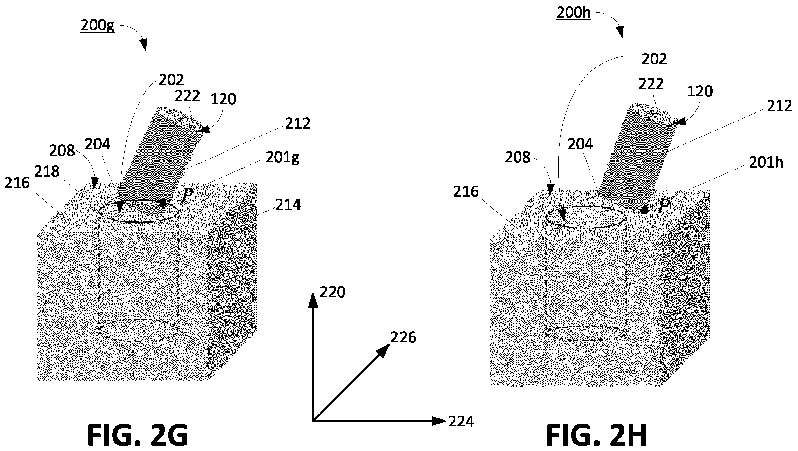

Referring now to FIG. 2G, a seventh category 200g of touch points can include other point contacts between the cylindrical object 120 and the hole 202. In particular, the top 218 of the hole 202 can contact the side surface 212 at a location at which the side surface 212 meets the bottom face 204, such that the seventh touch points 201g are defined at the bottom of the side surface 212 of the cylindrical object 120 and at the top 218 of the hole 202, in particular the top of the wall 214.

Referring now to FIG. 2H, an eighth category 200h of touch points can include point contacts between the cylindrical object 120 and the object body 208. In particular, the top surface 216 that defines the hole 202 can contact the side surface 212 at a location at which the side surface 212 meets the bottom face 204, such that seventh touch points 201h are defined at the bottom of the side surface 212 of the cylindrical object 120 and at the surface 216 of the object body 208.

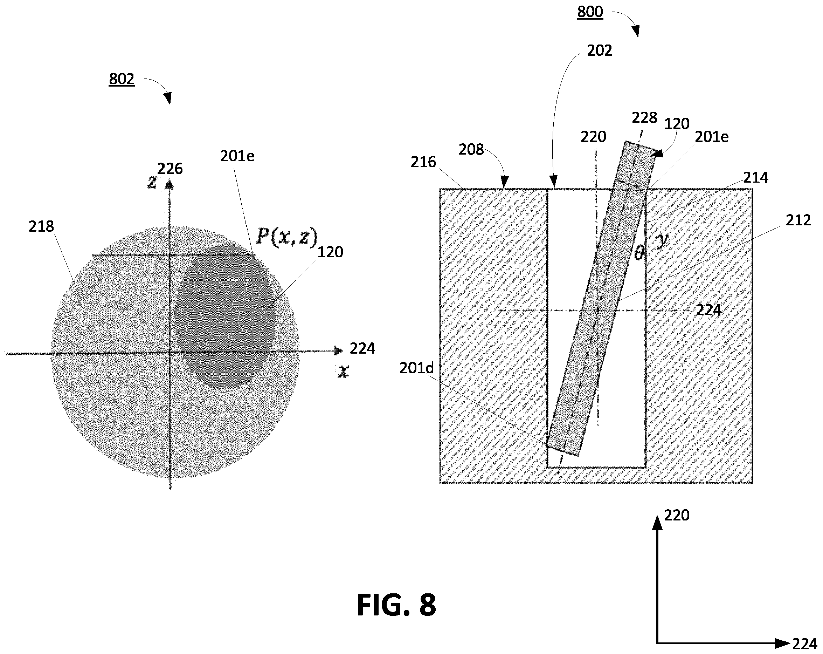

Referring generally to FIGS. 2A-H, the hole axis 220 can be defined along the direction from the top 218 of the hole 202 to the bottom face 206, such that the hole axis 220 can define the longitudinal direction, and thus hole axis and longitudinal direction can be used interchangeably herein, without limitation. Similarly, the cylinder can define a cylinder axis 228 (e.g., see FIG. 8) along a direction from the bottom face 204 to a top face 220 of the cylinder opposite the bottom face 204. Referring to FIGs. 2A-C, in some cases, for example, the cylinder axis 228 can be along the longitudinal direction 220. In other examples, the hole axis 220 and the cylinder axis 228 can be offset with respect to each other. For example, referring to FIGs. 2D-H, the hole axis 220 can define the longitudinal direction, and the cylinder axis 228 can be angularly offset with respect to the longitudinal direction 220. A z-axis or transverse direction 226 (e.g., see FIGs. 2G-H) or can be defined as the cross product of the cylinder axis 228 and the hole axis 220, such that the z-axis 226 can be substantially perpendicular to both the hole axis 220 and the cylinder axis 228. An x-axis or lateral direction 224 can be substantially perpendicular to both the longitudinal direction 220 and the z-axis 226. Thus, the hole axis 220 or longitudinal direction 220 can also be referred to herein as the y-axis, without limitation.

Referring again to FIG. 2A, a user can select an option in a simulation so as to monitor the position of the cylindrical object 120 relative to the hole 202. For example, the positions can be tracked so as to identify how one moves with respect to one another as an inserted position is defined. In the inserted position, the bottom face 204 of the cylindrical object 120 can abut the bottom face 206 of the hole 202 such that there is not space between the bottom face 204 and the bottom face 206. Further, in such an inserted position, the cylinder axis 228 and the hole axis can be aligned with each other along the longitudinal direction 220. In such a simulation, the simulation system can determine touch points 201a. In some cases, the touch point 201a can be defined at the center of the bottom face 204 of the cylindrical object 120. Further, during the simulation, motion can be constrained. In some examples, the area of the bottom face 204 is less than the area of the bottom face 206 of the hole 202, such that the cylindrical object 120 can move in a radial direction from the longitudinal direction 220, until the side surface 212 contacts the wall 214. The motion constraints can also permit the hole 202 and the cylindrical object 120 to rotate about the hole axis and the cylinder axis, respectively.

Referring again to FIG. 2B, a user can select an option in a simulation so as to simulate the cylindrical object 120 being inserted into the hole 202 into an inserted position in which the side surface 212 of the cylindrical object 120 can abut the wall 214 of the hole 202, such that there is no space between the side surface 212 and the wall 214. Further, in such an inserted position, the cylinder axis 228 and the hole axis 220 can be parallel with each other. In some examples, the bottom face 204 of the cylindrical object 120 can abut the bottom face 206 of the hole 202 in the inserted position. Alternatively, there can be space between the bottom face 204 and the bottom face 206 in the inserted position. Further, in such an inserted position, the bottom face 204 can define a plane that is parallel to a plane defined by the bottom face 206. During such a simulation, the simulation system can determine touch points 201b. In some cases, the touch point 201b can be defined as the tangent point to the wall 214 from the center of the circles defined by the cylindrical object 120. Further, during the simulation, motion can be constrained. In some examples, the cylindrical object 120 can be moved along the cylinder axis 228 toward, or away from, the bottom face 206 of the hole 202 until the bottom face 204 of the cylindrical object 120 makes contact with the bottom face 206. Similarly, the hole 202 can move along the hole axis 220 until the bottom face 206 of the hole 202 contacts the bottom face 204 of the cylindrical object 120. The motion constraints can also permit the hole 202 and the cylindrical object 120 to rotate about the hole axis 220 and the cylinder axis 228, respectively. Additionally, the motion constraints can also permit the hole 202 and the cylindrical object 120 to move with respect to each other along a normal direction from the contact point until the side surface 212 contacts the wall 214. Furthermore, the motion constraints can permit rotation of the hole 202 and the cylindrical object 120 with respect to each other about an axis perpendicular to the line contact at the bottom face 204 of the cylindrical object 120 and the top of the hole 202.

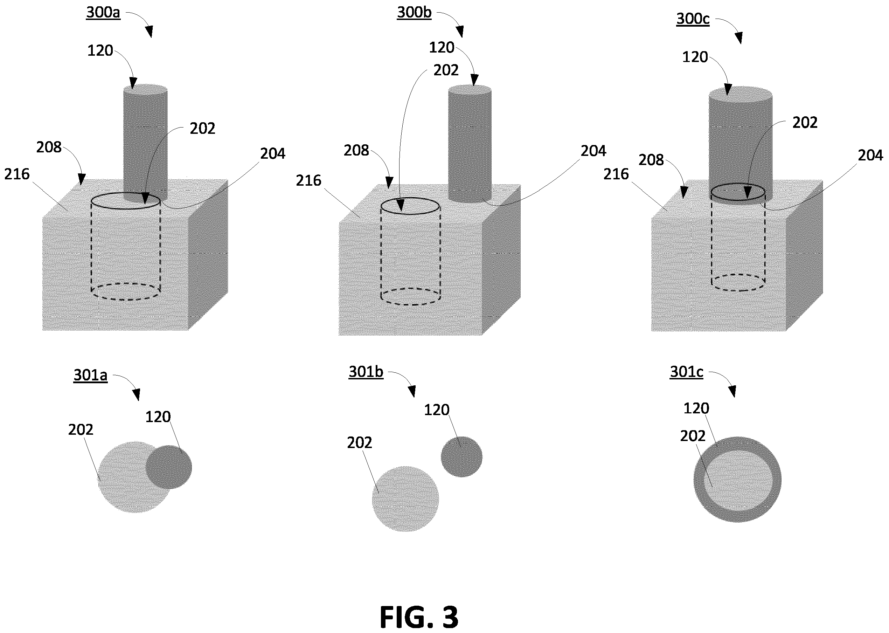

Referring again to FIG. 2C, a user can select an option in a simulation so as to simulate the cylindrical object 120 being placed near the hole 202, for instance on the top surface 216 of the object body 208. In such a placement, the bottom surface 204 of the cylindrical object 120 can rest on the top surface 216. Referring also to FIG. 3, in an example placement 300a corresponding to an example top view 301a, a portion of the bottom face 204 can overlap or intersect with the top 218 of the hole 202, such that at least some of the hole 202 is not covered by the cylindrical object 120. In another example placement 300b that corresponds to an example top view 301b, the bottom face 204 is placed on the top surface 216 such that no portion of the bottom face 204 overlaps with the hole 202. In yet another example placement 300c that corresponds to an example top view 301c, the bottom face 204 can define a radius that is larger than a radius defined by the top 218 of the hole 202, such that the cylindrical object 120 can rest upon the top surface 216 while covering the entire hole 202. In the various example placements 300a-c, the cylindrical object 120 can be supported by the object body 208 such that there is no space between the bottom face 204 and the top surface 216. During such a simulation, the simulation system can determine touch points 201c. In some cases, the touch point 201b can be defined as the center of the bottom face 204 of the cylindrical object 120. Further, during the simulation, motion can be constrained. In some examples, the cylindrical object 120 can be moved along any direction without being inserted into the hole 202. The motion constraints can also permit the hole 202 and the cylindrical object 120 to rotate about the hole axis 220 and the cylinder axis 228, respectively. Additionally, the motion constraints can also permit the cylindrical object 120 to rotate about any axis that is tangent to the side surface 212 and is on the plane defined by the bottom face 204.

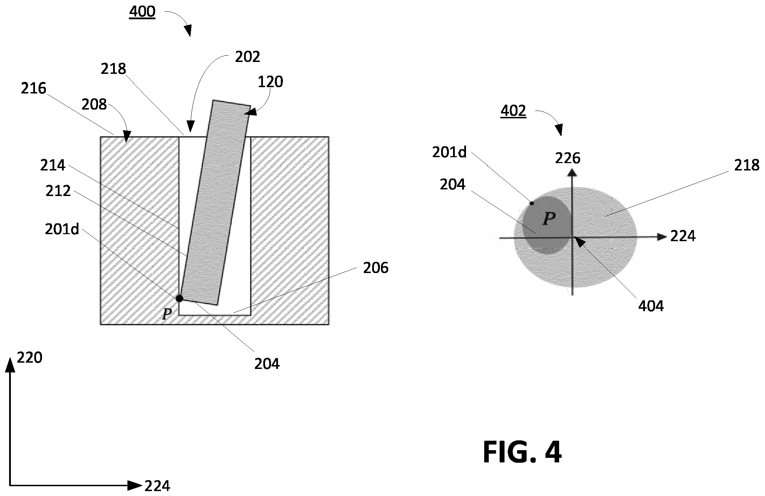

Referring again to FIG. 2D, and also to FIG. 4, a user can select an option in a simulation so as to simulate the cylindrical object 120 being inserted into the hole 202, such that an inserted position 400 is defined that includes the touch points 201d. In particular, the touch points 201d are defined at a location on the side surface 212 at which the side surface 212 meets the bottom face 204, such that the touch points 201d are defined at the bottom of the side surface 212 of the cylindrical object 120 and at any location on the wall 214 as desired. In the inserted position 400, the cylinder axis 228 and the hole axis 220 are not aligned with respect to each other, so as to define an offset or angle between the cylinder axis 228 and hole axis 220. An example projection 402 can correspond to the inserted position 400. The projection 402 defines a projection of the bottom face 204 of the cylindrical object 120 onto the top 218 of the hole 202. As shown, the projection 402 of the bottom of the cylindrical object 120 is within the boundaries of the hole 202. Further, the bottom face 204 of the cylindrical object 120 is within the hole 202.

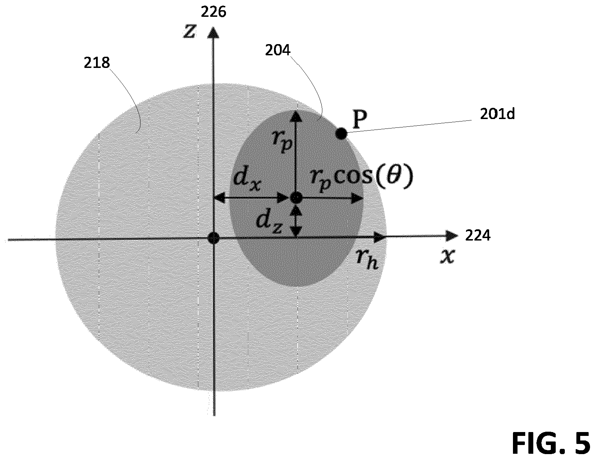

Referring in particular to FIG. 4 and FIG. 5, the projection 402 onto an xz plane 404, for instance the plane defined by the bottom face 206, defines an ellipse. The projection 402 includes the touch point 201d in the xz plane 404 that is the tangent point of the ellipse and the circle defined by the bottom face 206. Therefore, to determine the location of the touch point 201d, the simulation system can compute the tangent point of an ellipse and a circle. Similarly, the location of touch point 201e can be determined by computing the tangent point of an ellipse and a circle, as further described herein. In an example case, the simulation system determines or receives information that includes the radius $r_p$ of the peg or cylindrical object 120, the radius $r_h$ of the hole 202, and respective positions and axes of the cylindrical object 120 and hole 202 with respect to each other. Based on this information, the simulation system can determine an angle $\theta$ defined between the hole axis 220 and the cylinder axis 228. Further, based on this information, the simulation system can determine an offset $d_z$ between the centers of the ellipse (e.g., projection 402) and circle (e.g., bottom face 206) along the z-axis 226.

In particular, referring to FIG. 5, equations (1) and (2) can be defined for the circle and ellipse, respectively:

$$x^2 + z^2 = r_h^2 \tag{1}$$

$$\frac{(x-d_x)^2}{(r_p\cos(\theta))^2} + \frac{(z-d_z)^2}{r_p^2} = 1 \tag{2}$$

Referring to equation 2, the offset $d_x$ is unknown and refers to the distance between the centers of the ellipse and circle along the x-axis 224.

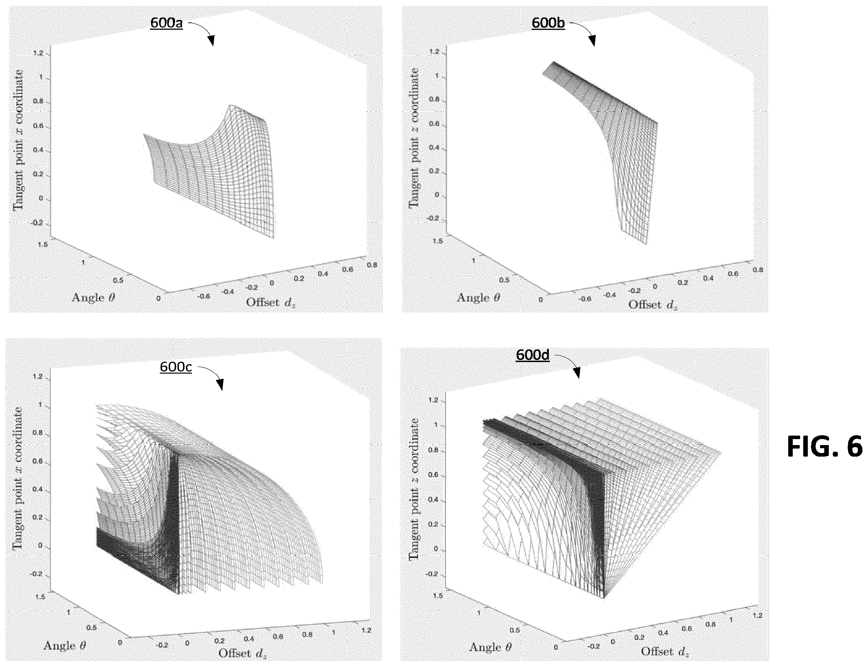

It is recognized herein that it may be possible to calculate the tangent point analytically, but such calculations involve deriving the condition that a quartic equation has only one real solution, which can be cumbersome and computationally expensive. Therefore, in accordance with various embodiments, the tangent point is calculated using numerical iterations. For example, by performing numerical iterations, a tangent point $P(x, z)$ can be found for values ($\theta$, $d_z$, t), where $\theta$ represents the angle between the cylinder axis 228 and the hole axis 220, $d_z$ represents the offset between centers along the z-axis 226, and t represents a ratio between the radius defined by the cylindrical object 120 and the radius defined by the hole 202. Next, the simulation system can generate a lookup table having data points for a wide range of values $\{P(x, z) = (\theta, d_z, t)\}$. Given any new set of values ($\theta$, $d_z$, t), the simulation system can calculate the corresponding touch point by interpolating the data in the lookup table. For example, referring to FIG. 6, example interpolations are shown. The example diagrams or graphs 600a and 600b illustrate a single slice from the example diagrams or graphs 600c and 600d, respectively, using a normalized radius value of 0.9. FIG. 6 shows the function that produces the tangent point's position (the x or z coordinate value) from the input values (Angle, Offset, and radius ratio). The diagrams 600a and 600c represent the x coordinate of the touch point and the diagrams 600b and 600d represent the z coordinate.

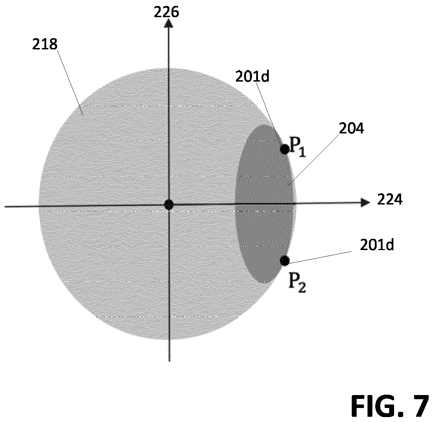

In some cases, referring to FIG. 7, the ellipse and the circle may define tangent points that are symmetric about the x-axis 224, for instance when

$$\frac{r_p}{r_h} > \cos\theta$$

and $d_z = 0$.

Referring also to FIG. 2E and FIG. 8, the y-coordinate (coordinate along the hole axis 220) of a touch point, for instance the touch point 201e, can be calculated by solving equation (3):

$$y = \frac{x - \frac{x-d_x}{\cos^2\theta}}{\tan(\theta)} \tag{3}$$

As shown in FIG. 8, in some cases, the system simulates the cylindrical object 120 being inserted into the hole 202, so to produce an inserted position 800 that includes the touch points 201d and 201e.

Referring again to FIGs. 2D and 5-7, the simulation system can limit motion subject to various constraints. For example, motion can be prohibited radially outward or normal to the wall 214 at the touchpoint 201d. In some examples in which the velocity of the hole 202 is greater than the velocity of the cylindrical object 120, relative velocity of the touch point 201d can be computed by multiplying the radius (offset of the touch point to the center of mass of the rigid body) by the sum of the linear velocity and the angulate velocity. Motion can further be prohibited tangentially to the wall 214 from the touch point 201d. The simulation system can also constraint motion as friction along the wall 214 of the hole 202, for instance parallel to the hole axis. Additionally, or alternatively, the simulation system can constrain motion as friction from rotation of the cylindrical object 120 about the cylinder axis or as friction from the rotation of the hole 202 about the hole axis.

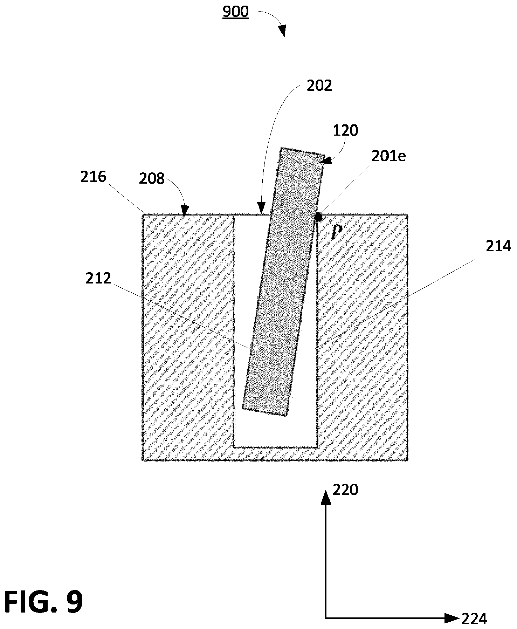

Referring again to FIG. 2E, and also to FIGS. 8 and 9, the inserted position 800 or an inserted position 900 is defined that includes the touch point 201e. In particular, the touch points 201e are defined at a location on the wall 214 at which the wall 214 meets the top surface 216 of the object body 208, such that the fifth touch points 201e are defined at the top 218 of the hole 202 and at any location on the side surface 212 as desired. In the inserted positions 800 and 900, the cylinder axis 228 and the hole axis 220 are not aligned with respect to each other, so as to define an offset or angle between the cylinder axis 228 and hole axis 220. An example projection 802 can correspond to the inserted position 800 and the inserted position 900. The projection 802 defines a projection of the xz plane defined by the cylindrical object 120 at the touch point 201e on the top 218 of the hole 202. As shown, the projection 802 of the cylindrical object 120 is within the boundaries of the hole 202. Further, the bottom face 204 of the cylindrical object 120 is within the hole 202 when the cylindrical object is in the inserted positions 800 and 900. It will be understood that the touch points 201e can be determined using the geometric computations described above with reference determining the touch points 201d.

With continuing reference to FIGs. 2E and 9, the simulation system can limit motion subject to various constraints. For example, motion can be prohibited radially outward or normal to the side surface 212 at the touchpoint 201e. Motion can also be prohibited tangentially to the side surface 212 at the touchpoint 201e. In accordance with the example, the simulation system can permit motion, in particular rotation, about the axis tangential to the side surface 212 at the touch point 201e. Additionally, or alternatively, the simulation system can allow rotation about the normal axis to the side surface 212 at the touch point 201e. The simulation system can also constraint motion as friction along the wall side surface 212 of the cylindrical object 120, for instance parallel to the cylinder axis. Additionally, or alternatively, the simulation system can constrain motion as friction from rotation of the cylindrical object 120 about the cylinder axis 228 or as friction from the rotation of the hole 202 about the hole axis 220.

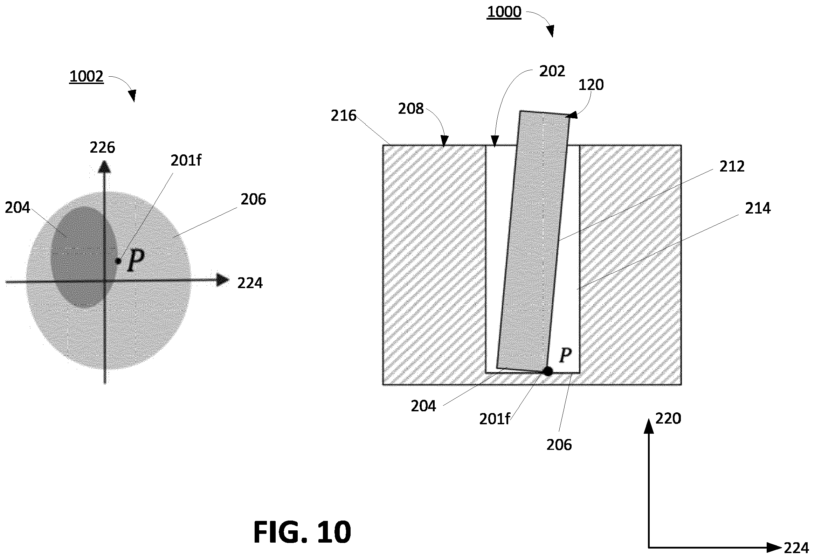

Referring again to FIG. 2F, and also to FIG. 10, the cylindrical object 120 is inserted into the hole 202, such that an inserted position 1000 is defined that includes the touch points 201f. In particular, the touch points 201f can be defined at a location on the side surface 212 at which the side surface 212 meets the bottom face 204, such that the touch points 201f are defined at the bottom of the side surface 212 of the cylindrical object 120 and at any location on the bottom face 206 of the hole 202 as desired. In the inserted position 1000, the cylinder axis 228 and the hole axis 220 are not aligned with respect to each other, so as to define an offset or angle between the cylinder axis and hole axis. An example projection 1002 can correspond to the inserted position 1000. The projection 1002 defines a projection of the bottom face 204 of the cylindrical object 120 onto the bottom face 206 of the hole 202. As shown, the projection 1002 is within the boundaries of the hole 202. Further, there is no space between the lowest point of the bottom face 204 of the cylindrical object 120 along the hole axis 220 and the bottom face 206 of the hole 202. Thus, in such an inserted position 1000, the simulation can determine the touch point 201f by determining the lowest point on the cylindrical object 120 along the hole or y-axis 220.

With continuing reference to FIGs. 2F and 10, the simulation system can limit motion subject to various constraints. For example, motion can be prohibited toward the bottom face 206 (downward) along the hole axis 220. In accordance with the example, the simulation system can permit motion, in particular rotation, about the axis normal to the bottom face 206 at the touch point 201f. Additionally, or alternatively, the simulation system can allow rotation about the tangent to the side surface 212 at the touch point 201f. The simulation system can also allow motion along the plane defined by the bottom face 206.

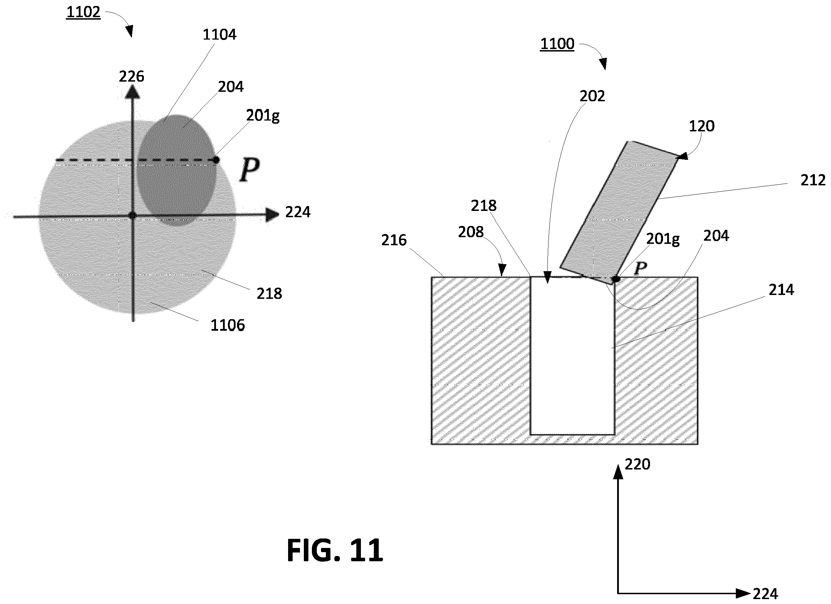

Referring again to FIG. 2G, and also to FIG. 11, the cylindrical object 120 may be inserted into the hole 202, such that a position 1100 is defined that includes the touch points 201g. In particular, the touch points 201g can be defined at or adjacent to the bottom of the side surface 212 of the cylindrical object 120, and at the top 218 of the hole 202, in particular the top of the wall 214 where the wall 214 meets the top surface 216. In the position 1100, the cylinder axis 228 and the hole axis 220 are not aligned with respect to each other, so as to define an offset or angle between the cylinder axis 228 and hole axis 220. Further, an example projection 1102 can correspond to the illustrated position 1100. The projection 1102 defines a projection of the bottom face 204 of the cylindrical object 120 onto the plane defined by the top 218 of the hole 202. As shown, the projection 1102, in particular an ellipse 1104 defined by the projection 1102 of the bottom face 204, intersects the top 218 of the hole 202 (circle 1106), such that the ellipse 1104 is partially outside the boundaries of the hole 202. The illustrated position 1100 can be referred to as an inserted or partially inserted position, as the lowest point of the cylindrical object 120 is below the top 218 of the hole 202, such that at least a portion of the cylindrical object 120 is inside the hole 202. Further, the lowest point of the bottom face 204 of the cylindrical object 120 is within the hole 202.

The simulation system can determine the touch points 201g by determining the intersection of the ellipse 1104 and the circle 1106, so as to calculate the xz coordinate of the touch point 201g. In some cases, it will be understood that such a determination can be made by calculating the solution of a quartic equation. The y-coordinate, or coordinate along the hole axis 220, of the touch point 201g can be determined by identifying the y-coordinate at the top 218 of the hole.

With continuing reference to FIGs. 2G and 11, the simulation system can limit motion subject to various constraints. For example, motion can be prohibited radially outward or normal to the side surface 212 at the touchpoint 201g. Motion can also be prohibited tangentially to the side surface 212 at the touchpoint 201g. In accordance with the example, the simulation system can permit motion, in particular rotation, about the axis tangential to the side surface 212 at the touch point 201g.

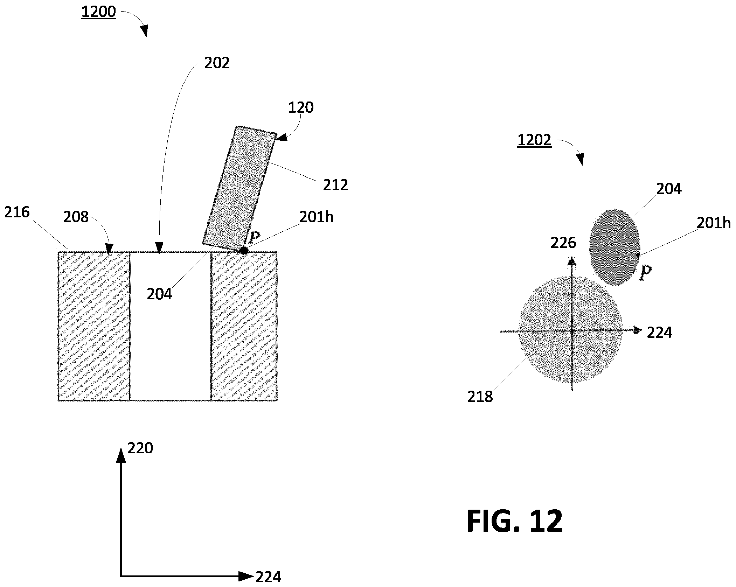

Referring again to FIG. 2H, and also to FIG. 12, the cylindrical object 120 may be placed adjacent to the hole 202, such that a position 1200 is defined that includes the touch points 201h. In particular, the top surface 216 that defines the hole 202 can contact the side surface 212 at a location at which the side surface 212 meets the bottom face 204, such that the touch points 201h are defined at the bottom of the side surface 212 of the cylindrical object 120 and at the surface 216 of the object body 208. In such the position 1200, the cylinder axis 228 and the hole axis 220 are not aligned with respect to each other, so as to define an offset or angle between the cylinder axis 228 and the hole axis 220. Further, an example projection 1202 can correspond to the illustrated position 1200. The projection 1202 defines a projection of the bottom face 204 of the cylindrical object 120 onto the plane defined by the top 218 of the hole 202. As shown, the projection 1202 of bottom face 1202 does not intersect the hole 202. The illustrated position 1200 can be referred to as a supported position outside the hole 202, as the lowest point of the cylindrical object 120 is supported by the surface 216 of the object body 208 that defines the hole 202. The simulation system can determine the touch points 201h by determining the location of the lowest point on the cylindrical object 120.

With continuing reference to FIGs. 2G and 12, the simulation system can limit motion subject to various constraints. For example, motion can be prohibited downward along the hole axis 220. In accordance with the example, the simulation system can permit motion, in particular rotation, about the axis normal to the bottom face 206 of the hole 202 at the touch point 201h. Additionally, rotation can be permitted about the tangent to the side surface 212 at the touch point 201h.

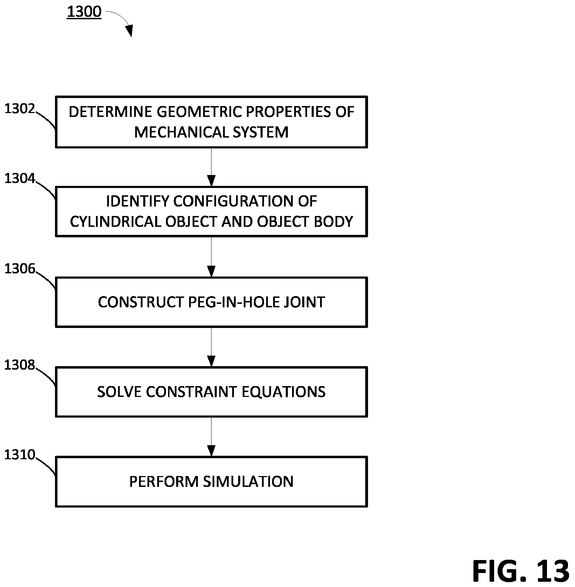

Referring now to FIG. 13, the simulation system can perform various operations 1300 so to encapsulate peg behavior as a rigid body simulation joint object. In particular, fast functions to compute ellipse intersections can be combined with geometry-based selection for different configurations of objects, so as to define constraint-based joints. Such joints in physics solvers can be specific and simplified as compared to computing the intersection of a large multitude of planar surfaces, which is required of other peg-in-hole solutions. It is recognized herein that ordinarily a user might simulate a peg in hole situation using collision detection, so as to respond with finite element approaches that can be inaccurate and slow.

Still referring to FIG. 13, the simulation system can include a processor and a memory storing instructions that, when executed by the processor, cause the simulation system to perform various operations, such as the operations 1300, so as to simulate a mechanical system. For example, at 1302, the simulation system can determine geometric properties of the mechanical system. In particular, the simulation system can determine that the mechanical system includes a cylindrical object and an object body that defines a hole. In some cases, a user can actuate an option on the simulation system to run a particular simulation of the mechanical system. At 1304, the simulation system can identify a configuration of the cylindrical object and the object body. At 1304, based on the configuration, the simulation system can construct a peg-in-hole joint that defines constraints associated with movement of the cylindrical object and the hole with respect to each other. The constraints can define one or more constraint equations associated with the configuration. The configuration can define a cylinder size of the cylindrical object, a hole size of the hole, and a position of the cylindrical object and the hole with respect to each other. In some examples, constructing the first peg-in-hole joint includes computing a touch point in accordance with the configuration. The touch point can identify a first location on the cylindrical object that makes contact with the object body and a second location on the object body that makes contact with the cylindrical object. Constructing the peg-in-hole joint can further include determining the one or more first constraint equations based on the touch point. At 1308, the simulation system can solve the constraint equations. At 1310, responsive to solving the constraint equations, the simulation system can perform the simulation in accordance with the constraints.

In some cases, the simulation system identifies a plurality of configurations of the cylindrical object and the object body. Based on the plurality of configurations, the simulation system can construct peg-in-hole joints that define respective constraints associated with movement of the cylindrical object and the hole with respect to each other. The constraints can define respective constraint equations associated with the respective configurations. Thus, the simulation system can solve the constraint equations so as to perform the simulation in accordance with all of the constraints.

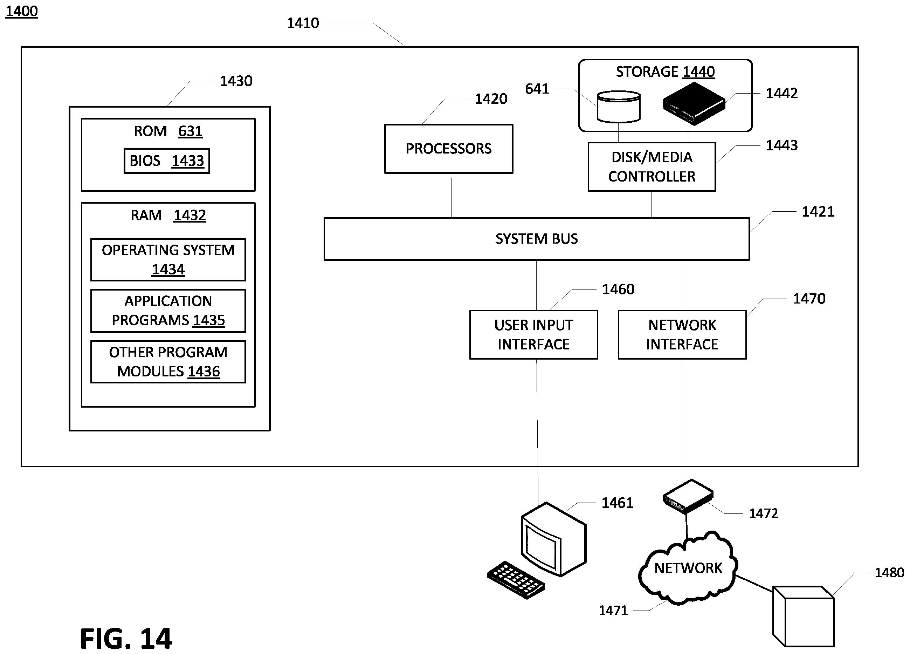

FIG. 14 illustrates an example of a computing environment that can include the simulation system within which embodiments of the present disclosure may be implemented. A computing environment 1400 includes a computer system 1410 that may include a communication mechanism such as a system bus 1421 or other communication mechanism for communicating information within the computer system 1410. The computer system 810 further includes one or more processors 1420 coupled with the system bus 1421 for processing the information. The autonomous system 102 may include, or be coupled to, the one or more processors 1420.

The processors 1420 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 1420 may have any suitable microarchitecture design that includes any number of constituent components such as, for example, registers, multiplexers, arithmetic logic units, cache controllers for controlling read/write operations to cache memory, branch predictors, or the like. The microarchitecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 1421 may include at least one of a system bus, a memory bus, an address bus, or a message bus, and may permit exchange of information (e.g., data (including computer-executable code), signaling, etc.) between various components of the computer system 1410. The system bus 1421 may include, without limitation, a memory bus or a memory controller, a peripheral bus, an accelerated graphics port, and so forth. The system bus 1421 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 14, the computer system 1410 may also include a system memory 1430 coupled to the system bus 1421 for storing information and instructions to be executed by processors 1420. The system memory 1430 may include computer readable storage media in the form of volatile and/or nonvolatile memory, such as read only memory (ROM) 1431 and/or random access memory (RAM) 1432. The RAM 1432 may include other dynamic storage device(s) (e.g., dynamic RAM, static RAM, and synchronous DRAM). The ROM 1431 may include other static storage device(s) (e.g., programmable ROM, erasable PROM, and electrically erasable PROM). In addition, the system memory 1430 may be used for storing temporary variables or other intermediate information during the execution of instructions by the processors 1420. A basic input/output system 1433 (BIOS) containing the basic routines that help to transfer information between elements within computer system 1410, such as during start-up, may be stored in the ROM 1431. RAM 1432 may contain data and/or program modules that are immediately accessible to and/or presently being operated on by the processors 1420. System memory 1430 may additionally include, for example, operating system 1434, application programs 1435, and other program modules 1436. Application programs 1435 may also include a user portal for development of the application program, allowing input parameters to be entered and modified as necessary.

The operating system 1434 may be loaded into the memory 1430 and may provide an interface between other application software executing on the computer system 1410 and hardware resources of the computer system 1410. More specifically, the operating system 1434 may include a set of computer-executable instructions for managing hardware resources of the computer system 1410 and for providing common services to other application programs (e.g., managing memory allocation among various application programs). In certain example embodiments, the operating system 1434 may control execution of one or more of the program modules depicted as being stored in the data storage 1440. The operating system 1434 may include any operating system now known or which may be developed in the future including, but not limited to, any server operating system, any mainframe operating system, or any other proprietary or non-proprietary operating system.

The computer system 1410 may also include a disk/media controller 1443 coupled to the system bus 1421 to control one or more storage devices for storing information and instructions, such as a magnetic hard disk 1441 and/or a removable media drive 1442 (e.g., floppy disk drive, compact disc drive, tape drive, flash drive, and/or solid state drive). Storage devices 1440 may be added to the computer system 1410 using an appropriate device interface (e.g., a small computer system interface (SCSI), integrated device electronics (IDE), Universal Serial Bus (USB), or FireWire). Storage devices 1441, 1442 may be external to the computer system 1410.

The computer system 1410 may also include a field device interface 1465 coupled to the system bus 1421 to control a field device 1466, such as a device used in a production line. The computer system 1410 may include a user input interface or GUI 1461, which may comprise one or more input devices, such as a keyboard, touchscreen, tablet and/or a pointing device, for interacting with a computer user and providing information to the processors 1420.

The computer system 1410 may perform a portion or all of the processing steps of embodiments of the invention in response to the processors 1420 executing one or more sequences of one or more instructions contained in a memory, such as the system memory 1430. Such instructions may be read into the system memory 1430 from another computer readable medium of storage 1440, such as the magnetic hard disk 1441 or the removable media drive 1442. The magnetic hard disk 1441 (or solid state drive) and/or removable media drive 1442 may contain one or more data stores and data files used by embodiments of the present disclosure. The data store 1440 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 1420 may also be employed in a multi-processing arrangement to execute the one or more sequences of instructions contained in system memory 1430. In alternative embodiments, hard-wired circuitry may be used in place of or in combination with software instructions. Thus, embodiments are not limited to any specific combination of hardware circuitry and software.

As stated above, the computer system 1410 may include at least one computer readable medium or memory for holding instructions programmed according to embodiments of the invention and for containing data structures, tables, records, or other data described herein. The term "computer readable medium" as used herein refers to any medium that participates in providing instructions to the processors 1420 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 1441 or removable media drive 1442. Non-limiting examples of volatile media include dynamic memory, such as system memory 1430. Non-limiting examples of transmission media include coaxial cables, copper wire, and fiber optics, including the wires that make up the system bus 1421. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The computing environment 1400 may further include the computer system 1410 operating in a networked environment using logical connections to one or more remote computers, such as remote computing device 1480. The network interface 1470 may enable communication, for example, with other remote devices 1480 or systems and/or the storage devices 1441, 1442 via the network 1471. Remote computing device 1480 may be a personal computer (laptop or desktop), a mobile device, a server, a router, a network PC, a peer device or other common network node, and typically includes many or all of the elements described above relative to computer system 1410. When used in a networking environment, computer system 1410 may include modem 1472 for establishing communications over a network 1471, such as the Internet. Modem 1472 may be connected to system bus 1421 via user network interface 1470, or via another appropriate mechanism.

Network 1471 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 1410 and other computers (e.g., remote computing device 1480). The network 1471 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 1471.

It should be appreciated that the program modules, applications, computer-executable instructions, code, or the like depicted in FIG. 14 as being stored in the system memory 1430 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 1410, the remote device 1480, and/or hosted on other computing device(s) accessible via one or more of the network(s) 1471, may be provided to support functionality provided by the program modules, applications, or computer-executable code depicted in FIG. 14 and/or additional or alternate functionality. Further, functionality may be modularized differently such that processing described as being supported collectively by the collection of program modules depicted in FIG. 14 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 14 may be implemented, at least partially, in hardware and/or firmware across any number of devices.

It should further be appreciated that the computer system 1410 may include alternate and/or additional hardware, software, or firmware components beyond those described or depicted without departing from the scope of the disclosure. More particularly, it should be appreciated that software, firmware, or hardware components depicted as forming part of the computer system 1410 are merely illustrative and that some components may not be present or additional components may be provided in various embodiments. While various illustrative program modules have been depicted and described as software modules stored in system memory 1430, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s).

In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

**Claims**

1.  A computer-implemented method for simulating a mechanical system, the method comprising:

    determining that the mechanical system includes a cylindrical object and an object body that defines a hole;
    identifying a first configuration of the cylindrical object and the object body;
    based on the first configuration, constructing a first peg-in-hole joint that defines first constraints associated with movement of the cylindrical object and the hole with respect to each other, the constraints defining one or more constraint equations associated with the first configuration; and
    solving the constraint equations so as to perform the simulation in accordance with the constraints.

2.  The method as recited in claim 1, wherein the first configuration defines a cylinder size of the cylindrical object, a hole size of the hole, and a position of the cylindrical object and the hole with respect to each other.

3.  The method as recited in claim 2, wherein constructing the first peg-in-hole joint further comprises:
    computing a touch point in accordance with the first configuration, the touch point identifying a first location on the cylindrical object that makes contact with the object body and a second location on the object body that makes contact with the cylindrical object.

4.  The method as recited in claim 3, wherein constructing the first peg-in-hole joint further comprises determining the one or more first constraint equations based on the touch point.

5.  The method as recited in claim 1, the method further comprising:

    identifying a second configuration of the cylindrical object and the object body;
    based on the second configuration, constructing a second peg-in-hole joint that defines second constraints associated with movement of the cylindrical object and the hole with respect to each other, the second constraints defining one or more second constraint equations associated with the second configuration; and
    solving the second constraint equations so as to perform the simulation in accordance with both the first constraints and the second constraints.

6.  A simulation system configured to render a simulation of a mechanical system, the simulation system comprising:

    a processor; and
    a memory storing instructions that, when executed by the processor, cause the simulation system to:

        determine that the mechanical system includes a cylindrical object and an object body that defines a hole;
        identify a first configuration of the cylindrical object and the object body;
        based on the first configuration, construct a first peg-in-hole joint that defines first constraints associated with movement of the cylindrical object and the hole with respect to each other, the constraints defining one or more constraint equations associated with the first configuration; and
        solve the constraint equations so as to perform the simulation in accordance with the constraints.

7.  The simulation system as recited in claim 6, wherein the first configuration defines a cylinder size of the cylindrical object, a hole size of the hole, and a position of the cylindrical object and the hole with respect to each other.

8.  The simulation system as recited in claim 7, the memory further storing instructions that, when executed by the processor, further cause the simulation system to:
    compute a touch point in accordance with the first configuration, the touch point identifying a first location on the cylindrical object that makes contact with the object body and a second location on the object body that makes contact with the cylindrical object.

9. The simulation system as recited in claim 7, the memory further storing instructions that, when executed by the processor, further cause the simulation system to:
determine the one or more first constraint equations based on the touch point.

10. The simulation system as recited in claim 7, the memory further storing instructions that, when executed by the processor, further cause the simulation system to:

identify a second configuration of the cylindrical object and the object body;
based on the second configuration, construct a second peg-in-hole joint that defines second constraints associated with movement of the cylindrical object and the hole with respect to each other, the second constraints defining one or more second constraint equations associated with the second configuration; and
solve the second constraint equations so as to perform the simulation in accordance with both the first constraints and the second constraints.

EP 4 123 495 A1

**FIG. 1**

**FIG. 2A**

**FIG. 2B**

**FIG. 2C**

**FIG. 2D**

**FIG. 2E**

**FIG. 2F**

EP 4 123 495 A1

**FIG. 2H**

**FIG. 2G**

FIG. 3

EP 4 123 495 A1

FIG. 4

EP 4 123 495 A1

**FIG. 5**

FIG. 6

FIG. 7

**FIG. 8**

EP 4 123 495 A1

EP 4 123 495 A1

**FIG. 9**

**FIG. 10**

FIG. 11

FIG. 12

EP 4 123 495 A1

1300

1302 — DETERMINE GEOMETRIC PROPERTIES OF MECHANICAL SYSTEM

1304 — IDENTIFY CONFIGURATION OF CYLINDRICAL OBJECT AND OBJECT BODY

1306 — CONSTRUCT PEG-IN-HOLE JOINT

1308 — SOLVE CONSTRAINT EQUATIONS

1310 — PERFORM SIMULATION

**FIG. 13**

**FIG. 14**

# EUROPEAN SEARCH REPORT

**Application Number**

EP 21 18 7228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK HYEONJUN ET AL: "Compliant Peg-in-Hole Assembly Using Partial Spiral Force Trajectory With Tilted Peg Posture", IEEE ROBOTICS AND AUTOMATION LETTERS, IEEE, vol. 5, no. 3, 5 June 2020 (2020-06-05), pages 4447-4454, XP011793976, DOI: 10.1109/LRA.2020.3000428 [retrieved on 2020-06-16] * abstract * * page 4448 – page 4452 * * figures 1-3,5, 9-11 * ----- | 1-10 | INV. G06F30/20 G06F30/17 G06F30/27 G09B9/00 ADD. G06F111/04 |
| X | DONG ET AL: "Application of hidden Markov model to acquisition of manipulation skills from haptic rendered virtual environment", ROBOTICS AND COMPUTER INTEGRATED MANUFACTURING, ELSEVIER SCIENCE PUBLISHERS BV., BARKING, GB, vol. 23, no. 3, 9 February 2007 (2007-02-09), pages 351-360, XP005878185, ISSN: 0736-5845, DOI: 10.1016/J.RCIM.2006.02.010 * abstract * * page 351 – page 352 * * page 354 – page 358 * * figure 5 * ----- -/-- | 1-10 | |

**TECHNICAL FIELDS SEARCHED (IPC)**

G06F
G09D
G09B

The present search report has been drawn up for all claims

| Place of search | Date of completion of the search | Examiner |
|---|---|---|
| Munich | 21 December 2021 | Radev, Boyan |

**page 1 of 2**

Europäisches
Patentamt

European
Patent Office

Office européen
des brevets

## EUROPEAN SEARCH REPORT

Application Number

EP 21 18 7228

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEUNG-KOOK YUN ED - KYUNG JIN KIM ET AL: "Compliant manipulation for peg-in-hole: Is passive compliance a key to learn contact motion?", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW; PASADENA, CA, USA, MAY 19-23, 2008, IEEE, PISCATAWAY, NJ, USA, 19 May 2008 (2008-05-19), pages 1647-1652, XP031340381, ISBN: 978-1-4244-1646-2 * abstract * * page 1647 - page 1651 * * figures 3,7 * | 1-10 | |
| X | LIU NAILONG ET AL: "A containerized simulation platform for robot learning peg-in-hole task", 2018 13TH IEEE CONFERENCE ON INDUSTRIAL ELECTRONICS AND APPLICATIONS (ICIEA), IEEE, 31 May 2018 (2018-05-31), pages 1290-1295, XP033366657, DOI: 10.1109/ICIEA.2018.8397908 [retrieved on 2018-06-26] * abstract * * page 1290 - page 1295 * | 1-10 | TECHNICAL FIELDS SEARCHED (IPC) |

The present search report has been drawn up for all claims

| Place of search | Date of completion of the search | Examiner |
|---|---|---|
| Munich | 21 December 2021 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)